# EUROPÄISCHE PATENTSCHRIFT

(11) **EP 0 843 623 B1**
(45) Veröffentlichungstag und Bekanntmachung des Hinweises auf die Patenterteilung: **27.10.1999**
(21) Anmeldenummer: 96928447.0
(22) Anmeldetag: 09.08.1996
(51) Int. Cl.: B60C 23/04

(54) **VORRICHTUNG ZUR ÜBERWACHUNG DES LUFTDRUCKES VON LUFTBEREIFTEN FAHRZEUGRÄDERN**
DEVICE FOR MONITORING THE AIR PRESSURE OF PNEUMATIC TYRES OF VEHICLES
DISPOSITIF PERMETTANT DE CONTROLER LA PRESSION DE GONFLAGE DE ROUES DE VEHICULES EQUIPEES DE PNEUMATIQUES

(30) Priorität: 11.08.1995 DE 19529623; 06.09.1995 DE 19532914
(43) Veröffentlichungstag der Anmeldung: 27.05.1998
(73) Patentinhaber: Dynatron AG, 8032 Zürich (CH)
(72) Erfinder: MOCK, Markus, CH-8610 Uster (CH); VÖLLM, Ernst, CH-8802 Kilchberg (CH)
(74) Vertreter: Wallinger, Michael, Dr.-Ing.
(86) Internationale Anmeldenummer: EP9603545
(87) Internationale Veröffentlichungsnummer: WO9706968

(56) Entgegenhaltungen:
- EP-A- 0 445 003
- WO-A-90/12474
- WO-A-93/16891
- FR-A- 2 441 502

## Beschreibung

Die vorliegende Erfindung betrifft eine Vorrichtung zur Überwachung des Luftdruckes in den Luftkammern von luftbereiften Fahrzeugrädern, wie sie insbesondere bei Personenkraftwagen und Lastkraftwagen verwendet werden, wobei die Erfindung aber auch bei allen anderen luftbereiften Rädern angewendet werden kann.

Aus der DE-A 28 50 787 ist eine Niederdruck-Alarmeinrichtung für Kraftfahrzeugreifen und insbesondere für Lastkraftwagen bekannt geworden, bei der an jedem Reifen eine Sensoreinrichtung mit einem Drucksensor, einem Stromgenerator und einem Sender vorgesehen ist. Alle diese Bauteile sind in einer einzigen Einheit integriert. Der Druckfühler wird an der Innenwand des Reifens oder an der Felge des Reifens befestigt, wobei die Betriebsenergie durch Ausnutzen der Walkbewegung des Reifens erzeugt oder von außen eingestrahlt wird. Die Antenne ist in einer nachgiebigen ausgeschäumten Hülle untergebracht, die im Rad gehalten oder geführt wird.

Aus der WO 90/12474 ist ein Klassifizierungssystem für Fahrzeugreifen bekannt geworfen, bei welchem eine Spule in die Lauffläche eines Reifens eingebettet ist.

In der WO 93/16891, die am 2. September 1993 veröffentlicht worden ist, ist eine Kontrollvorrichtung zur Messung des Luftdruckes von luftbereiften Fahrzeugrädern beschrieben, bei welcher in jedem der Räder eine Druckmeßeinrichtung angeordnet ist, die den Druck des Rades erfaßt und über eine ebenfalls im Rad angeordnete Sendeeinrichtung ein dem gemessenen Druckwert entsprechendes Signal überträgt. Dieses Signal wird durch eine in unmittelbarer Nähe des Rades angeordnete Empfangseinrichtung empfangen und weiterverarbeitet. Alternativ dazu ist auch die Verwendung einer zentralen Empfangseinrichtung möglich, die die Signale aller Räder des Fahrzeuges erfaßt.

Die Druckmeßeinrichtung überträgt das Druckmeßsignal in Intervallen, wobei jeweils ein Identifizierungs-Signal mit übertragen wird, um einerseits sicherzustellen, daß nur Werte des eigenen Fahrzeuges empfangen werden und nicht beispielsweise Sendesignale eines zufälligerweise daneben stehenden Fahrzeuges und um weiterhin sicherzustellen, daß das gesendete Signal eindeutig der Position des jeweiligen Rades zugeordnet werden kann. Zur Stromversorgung des Sendegerätes wird eine Lithiumbatterie eingesetzt, die mit dem Rad rotiert.

Es ist die Aufgabe der vorliegenden Erfindung, eine Vorrichtung zur Überwachung des Reifendrucks in luftbereiften Rädern zu schaffen, deren Aufbau im Vergleich zu bekannten Vorrichtungen vereinfacht ist und die vom Benutzer komfortabel und sicher zu handhaben ist.

Diese Aufgabe wird erfindungsgemäß durch den Gegenstand des Anspruches 1 gelöst.

Zu bevorzugende Weiterbildungen der Erfindung sind Gegenstand der Unteransprüche.

Bei der erfindungsgemäßen Gestaltung ist eine Antenne vorgesehen, die elektrisch mit dem Sendegerät verbunden aber nicht in dieses integriert ist.

Dadurch wird es möglich, die elektromagnetische Übertragung der Signale und insbesondere deren Wirkungsgrad zu verbessern.

Bei einer ersten Ausführungsform der Erfindung ist die Antenne in die Lauffläche des Fahrzeugreifens integriert. Besonders bevorzugt sind mehrere Windungen vorgesehen, die nebeneinander entlang dem Umfang angeordnet sind.

Gemäß einer weiteren Ausführungsform ist die Antenne in eine Seitenflanke des Reifens integriert. Auch in diesem Fall werden vorzugsweise eine Vielzahl von benachbarten Windungen vorgesehen.

Dabei kann die Antennenposition sowohl auf der Radinnenseite als auch auf der Radaußenseite vorgesehen sein.

Bei den vorgenannten Ausführungsbeispielen wird man die Sendeeinrichtung vorzugsweise in bezug auf den Reifen und nicht in bezug auf die Felge festlegen. Die Sendeeinrichtung wird dann vorzugsweise in die Reifenseitenwand oder die Lauffläche integriert. Unter Integration ist in diesem Fall und auch in bezug auf die Antenne vorzugsweise ein Einvulkanisieren zu verstehen.

Neben der Möglichkeit, die Antenne und gegebenenfalls auch die Sendeeinrichtung in die Reifenseitenwand oder die Lauffläche einzuvulkanisieren, besteht weiterhin die Möglichkeit, die Antenne unmittelbar an der Lauffläche oder an der Seitenflanke des Reifens festzulegen. Unter Festlegen sind in diesem Fall verschiedenen Möglichkeiten der Befestigung zu verstehen, insbesondere die Möglichkeit, die Antenne am Reifen anzukleben. Weiterhin ist unter Befestigen aber auch eine Festlegung der Antenne in bezug auf die Lauffläche oder die Seitenflanke zu verstehen, bei der Klemmkräfte und insbesondere elastische Kräfte verwendet werden, welche die Antenne in einer vorgegebenen Position halten. Bei dieser Ausführungsform sind vorzugsweise zusätzliche Halteeinrichtungen vorgesehen, die für eine Festlegung der Antenne in bezug auf die Reifenkontur und den Reifenumfang sorgen. Auch in diesem Fall ist die Sendeeinrichtung vorzugsweise in bezug auf den Reifen festgelegt, das bedeutet, daß die Position der Sendeeinrichtung durch die Position der Antenne im Reifen festgelegt ist und nicht durch eine Position in bezug auf die Felge. Es ist also nicht erforderlich, die Sendeeinrichtung in einer bestimmten Position in bezug zur Felge zu bringen.

Bei einer anderen Ausführungsform wird die Antenne in die Fahrzeugfelge integriert, wobei auch hier die Integration in das Felgenbett oder die Integration in die Seitenflanke in Frage kommt. Bei einer Felge ist es auch möglich, die Antenne auf das Felgenbett selbst zu wickeln.

Die vorgenannten Ausführungsformen haben den Vorteil, daß eine Antennenspule zur Verfügung steht, die es erlaubt, daß Signale im Langwellenbereich zuverlässig und mit hohem Wirkungsgrad zu übertragen. Darüber hinaus ergibt sich der Vorteil, daß die Antenne, da sie rotationssymetrisch und konzentrisch zum Fahrzeugrad angeordnet ist, ihre Position relativ zur Empfangsantenne bei der Raddrehung nicht, oder nur unwesentlich ändert, beispielsweise beim Einschlagen der Vorderräder oder beim Einfedern der Vorder- oder Hinterräder. Wird die Antenne dagegen beispielsweise ins Fahrzeugventil integriert, so ändert sich die Position der Antenne mit der Umdrehung des Rades, was zu Störungen in der Übertragung führen kann und was insbesondere dazu führt, daß der Wirkungsgrad der Übertragung insgesamt vermindert wird.

Bei der erfindungsgemäßen Antennengestaltung ist der Übertragungswirkungsgrad besonders hoch, so daß es möglich ist, elektrische Energie vom Fahrzeug auf das rotierende Rad zu übertragen, wobei in diesem Fall die im Fahrzeugrad angeordnete Sendeeinrichtung zur Empfangseinrichtung wird. Die Energie wird dort beispielsweise mittels Kondensatoren gespeichert und dazu verwendet, den Druck zu messen und das gewonnene Drucksignal drahtlos auf die Empfangseinrichtung zu übertragen. Diese Ausführung hat den Vorteil, daß die Sendeeinrichtung keine Batterie benötigt. Dadurch wird es möglich, die Sendeeinrichtung in der Weise in der Felge und insbesondere im Reifen selbst anzuordnen, daß eine Zugänglichkeit zum Batterieaustausch nicht erforderlich ist.

Durch die besondere Anordnung der Antenne wird auch der sogenannte Paarungsmodus, das bedeutet die Zuordnung der individuellen Sendeeinrichtung zu einer Empfangseinrichtung beziehungsweise zu einer bestimmten Radposition vereinfacht.

Bei dem in der WO 93/16891 beschriebenen Verfahren geschieht die Paarung, indem die Empfangseinrichtung ein Paarungssignal empfängt, und nach dem Empfang des Paarungssignals die zugeordnete Adresse speichert, wobei die Aussendung des Paarungssignales durch ein bestimmtes Ereignis ausgelöst wird und andererseits die erfolgte Paarung durch den Benutzer bestätigt werden muß. Bei der erfindungsgemäßen Vorrichtung kann ebenfalls ein äußeres Ereignis, beispielsweise der Anstieg oder der Abfall des von der Sendeeinrichtung gemessenen Luftdruckes dazu verwendet werden, einen Paarungsmodus auszulösen. Zusätzlich wird jedoch ein Paarungsmodus ermöglicht, der automatisch ohne Zutun des Benutzers funktioniert. Bei diesem Paarungsmodus wird in vorgegebenen Zeitabständen, beispielsweise immer nach einer Anzahl von Druckmessungen, oder in vorgegebenen zeitlichen Abständen ein Paarungssignal von der Sendeeinrichtung mit der entsprechenden Adresse ausgestrahlt. Das Empfangsgerät erkennt dieses Paarungssignal und vergleicht das nach dem Paarungssignal empfangene Identifikationssignal mit dem Identifikationssignal, das im Speicher des Empfangsgerätes abgespeichert ist. Sind die Signale identisch, wird kein Paarungsmodus initiiert. Unterscheiden sich die Signale prüft die Empfangseinrichtung auf Grundlage eines dort gespeicherten Programmes, wie oft das Signal empfangen wird. Gleichzeitig überprüft die Empfangseinrichtung vorzugsweise auch, ob sich das Fahrzeug während der Messung bewegt. Wird für eine länger andauernde Zeitdauer festgestellt, daß immer das gleiche Paarungssignal empfangen wird, wird das dazugehörige Identifikationssignal als neues Identifikationssignal im Speicher der Empfangseinrichtung abgespeichert. Um die Sicherheit weiter zu erhöhen, kann die Empfangseinrichtung weiterhin überprüfen, ob die zwischen den einzelnen Paarungssignalen gesendeten Druckmeßsignale das Identifikationssignal aufweisen, welches als altes Identifikationssignal in der Empfangseinrichtung gespeichert ist. Ist dies der Fall, wird das neue Identifikationssignal nicht abgespeichert.

Die vorbeschriebene Verfahrensweise der Paarung hat den Vorteil, daß die Paarung automatisch ohne Betätigung einer Schalteinrichtung oder dergleichen ausgeführt wird. Das bedeutet, daß die Paarung auch dann ausgeführt wird, wenn der Benutzer beispielsweise von Sommerreifen auf Winterreifen wechselt und vergißt, die Einrichtungen entsprechend zu paaren. Das Verfahren kann selbstverständlich auch als einziges Paarungsverfahren verwendet werden, ohne daß zusätzliche Schalteinrichtungen oder dergleichen vorhanden sind. Da die Signale mehrfach empfangen werden müssen und da außerdem vorzugsweise eine Bewegung des Fahrzeugs erforderlich ist, ist sichergestellt, daß nicht zufällig empfangene Signale, beispielsweise von einem benachbart stehenden Fahrzeug als Identifikationssignal abgespeichert werden.

Nur äußerst vorsorglich wird darauf hingewiesen, daß das gesamte vorbeschriebene Paarungsverfahren mit seinen verschiedenen Abwandlungen auch bei Einrichtungen zum Überwachen des Reifendrucks eingesetzt werden können, die eine andere Antennengestaltung aufweisen, als die erfindungsgemäße Einrichtung, beispielsweise als auch mit Einrichtungen, bei denen die Antenne in die Sendeeinrichtung integriert ist und beispielsweise am Ventil befestigt ist.

Bei der erfindungsgemäßen Gestaltung stellt die Antenne vorzugsweise eine Induktivität, d.h. also eine Spule, dar, und ist mit einer Kapazität zu einem Schwingkreis zusammengeschaltet. Die Spule wird vorzugsweise gebildet, indem ein elektrisch leitender Draht als Antenne in einer dem Rad angepaßten Form verlegt wird. Dadurch wird die Felge bzw. der Reifen selbst, beides Gegenstände, die im wesentlichen rotationssymmetrisch gestaltet sind, zum 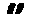 Wickelkern" der Spule.

Versuche haben ergeben, daß bei einer von der Erfindung bevorzugten Übertragung des Meßsignals im Langwellenbereich unter 50 kHz zehn Windungen ausreichen, um das Signal in guter Qualität vom Sender im Rad zum zugeordneten Empfänger zu übertragen.

Die Antenne der Empfangseinrichtung wird bevorzugt in ähnlicher Weise ausgestaltet, wie die Antenne der Sendeeinrichtung und beispielsweise im Bereich der Scheibenbremse als Spule mit einem Durchmesser der vorzugsweise etwas größer ist als die Scheibenbremse angeordnet. Auf diese Art und Weise sind die Antennen von Sendeeinrichtung und Empfangseinrichtung benachbart und konzentrisch zueinander angeordnet, wodurch sich eine besonders gute und sichere Signalübertragung ergibt.

Es ist auch möglich und liegt im Rahmen der vorliegenden Erfindung, zur Signalübertragung ein hochfrequentes Signal, beispielsweise im Industriefrequenzband von einigen 100 MHz, beispielsweise im Bereich von 400 bis 500 MHz zu verwenden. In diesem Fall kann die Antenne auch als Dipol ausgestaltet werden. Die Verwendung einer derart hohen Frequenz hat aber jedoch auch eine Reihe von Nachteilen, wozu insbesondere die Problematik der elektromagnetischen Verträglichkeit mit anderen Baugruppen des Fahrzeuges gehört.

Die Übertragung mit geringer Frequenz, besonders bevorzugt ist ein Bereich zwischen 5 und 15 kHz und ganz besonders bevorzugt ein Bereich zwischen 8000 und 10000 Hertz hat den großen Vorteil, daß eine bessere Richtwirkung vorhanden ist und daß die Gefahr von Störungen von anderen Einrichtungen oder auch von Störungen durch andere Einrichtungen weitaus geringer ist.

Aufgrund der Übertragungscharakteristik ist es sinnvoll, an jedem Rad eine zugeordnete Empfangseinrichtung zu verwenden. Diese erhöht zwar auf den ersten Blick den Aufwand für die Vorrichtung insgesamt, hat aber auf der anderen Seite den Vorteil, daß die Zuordnung der Radposition zur jeweiligen Empfangsposition einfacher zu bewerkstelligen ist, als z.B. bei einer hochfrequenten Signalübertragung, bei der nur eine Empfangseinrichtung vorgesehen ist.

Weitere Vorteile, Merkmale und Anmeldemöglichkeiten der vorliegenden Erfindung ergeben sich aus der Beschreibung von Ausführungsbeispielen im Zusammenhang mit der Zeichnung. Darin zeigt:
- Figur 1: eine schematische Darstellung eines Ausführungsbeispiels der erfindungsgemäßen Vorrichtung zur Überwachung des Luftdruckes von luftbereiften Fahrzeugrädern;
- Figur 2: die Anordnung der Antenne in der Lauffläche eines Reifens;
- Figur 3: die Anordnung der Antenne auf der Radaußenseite eines Reifens;
- Figur 4: die Anordnung einer Antenne auf der Radinnenseite eines Reifens;
- Figur 5: eine torusförmige Antenne;
- Figur 6: eine Antenne mit zylindrischer Gestaltung;
- Figur 7: eine Antenne mit scheibenförmiger Gestaltung;
- Figur 8: eine schematische Seitenansicht eines weiteren Ausführungsbeispiels der erfindungsgemäßen Vorrichtung;
- Figur 9: eine Darstellung einer Halteeinrichtung zur Verwendung mit dem Ausführungsbeispiel gemäß Fig. 8 in einer Seitenansicht;
- Figur 10: die Halteeinrichtung gemäß Fig. 9 in einer Stirnansicht;
- Figur 11: ein Detail eines weiteren Ausführungsbeispiels der erfindungsgemäßen Vorrichtung in einer schematischen Seitenansicht;
- Figur 12: eine Schnittdarstellung eines weiteren Ausführungsbeispiels der erfindungsgemäßen Vorrichtung;
- Figur 13: eine schematische Seitenansicht des Ausführungsbeispiels gemäß Fig. 12 und
- Figur 14: ein weiteres Ausführungsbeispiel der erfindungsgemäßen Vorrichtung.

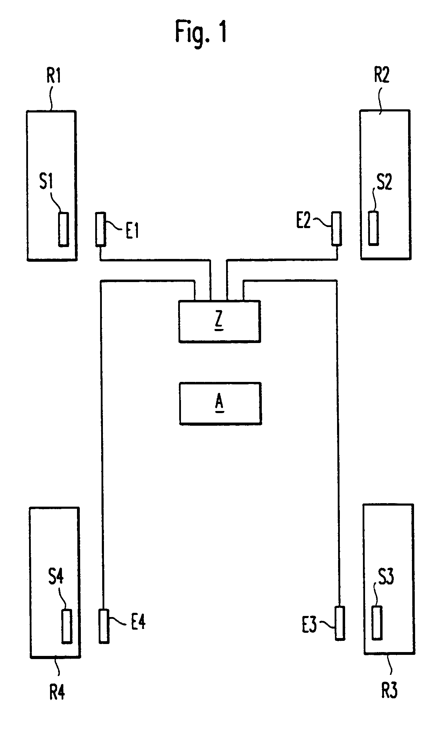

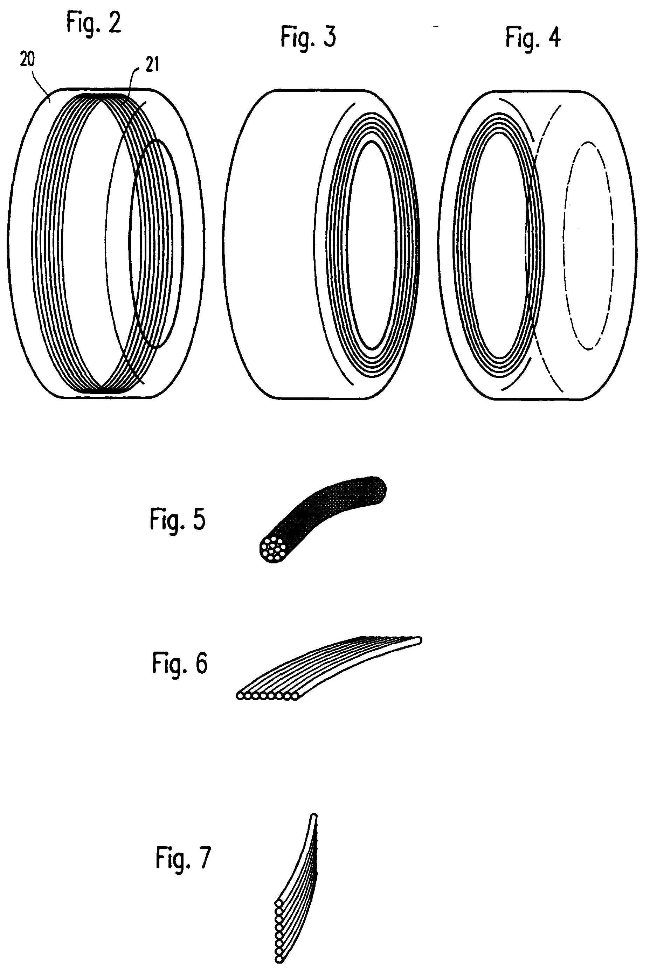

Ein erstes Ausführungsbeispiel wird nun in bezug auf die Figuren 1 und 2 beschrieben.

Figur 1 zeigt eine schematische Darstellung einer Vorrichtung zur Überwachung des Luftdruckes von Luftbereifungen, wie sie in der WO 93/16891 in bezug auf diese Figur und in bezug auf die dort dargestellten Figuren 1 bis 5 beschrieben ist. Die Beschreibung dieses Ausführungsbeispieles WO 93/16891 (Aktenzeichen PCT/EP 93/0452) wird durch diesen Verweis in die Offenbarung der vorliegenden Patentanmeldung einbezogen, und zwar insbesondere die spezielle Figurenbeschreibung von der Seite 11 Zeile 26 bis Seite 23 Zeile 28.

Das in Figur 1 gezeigte Ausführungsbeispiel zeigt die erfindungsgemäße Vorrichtung in der Anordnung für einen PKW mit vier Rädern, wobei die Räder jeweils aus einer Metallfelge (selbstverständlich ist auch eine Felge beispielsweise aus CFK möglich und denkbar) sowie einem darauf angeordneten Reifen bestehen. Für den Aufbau und die Funktion der Vorrichtung ist es unerheblich, ob es sich hier um einen sogenannten schlauchlosen Reifen oder einen Reifen mit Schlauch handelt.

Der PKW weist vier Räder R1, R2, R3, R4 auf, an denen jeweils ein Sendegerät S1, S2, S3, S4 angeordnet ist, welches mit dem Reifen umläuft.

Ferner sind vier Empfangsgeräte E1, E2, E3, E4 vorgesehen, die jeweils diesen einzelnen Sendeeinrichtungen zugeordnet sind. Der Aufbau der Sendeeinrichtung ist detailliert in der WO 396 016 891 in bezug auf die Figur 2 beschrieben, der Aufbau der Empfangseinrichtung detailliert in der WO 93/1689 in bezug auf die Figur 5.

Kurz zusammengefaßt umfaßt die Sendeeinrichtung eine Druckmeßeinrichtung, die vorzugsweise einen Drucksensor vom piezoelektrischem Typ aufweist, dessen analoges Ausgangsignal über eine Signalaufbereitungsschaltung mittels eines A/D-Wandlers in ein Digitalsignal umgewandelt wird. Das digital aufbereitete Signal wird einer Mikroprozessor-Recheneinheit zugeführt, welche mit einem Speicher verbunden ist. Zur Zeitsteuerung ist ein Zeitgeber vorgesehen.

Der Speicher ist als Festwertspeicher und als Speicher mit wahlfreiem Zugriff ausgestattet und enthält ein Programm, das die Sendeeinrichtung steuert. Das Sendesignal wird, über eine Signalaufbereitungsschaltung und die Antenne dann mit einer Frequenz von ca. 8900 Hertz ausgestrahlt, wobei diese Ausstrahlung in Intervallen geschieht, die vom Zeitgeber vorgegeben werden. Bei jeder Signalausstrahlung wird, wie dies die Figur 3 und die Figur 4 in der WO 93/16891 zeigen, eine Präambel von 16 Bit, ein Identifikationssignal von 32 Bit, ein Datensignal mit 24 Bit, welches den Druckwert enthält, und eine Postambel mit 4 Bit übertragen.

Jedes der Empfangsteile weist eine Antenne auf, deren Signal einer Signalverarbeitungsstelle zugeordnet wird, in der das Signal verstärkt und gefiltert wird. Dann wird das Signal in einer Demodulierstufe demoduliert und als digitales Signal einer Mikroprozessoreinrichtung zugeführt.

Für die Empfangsteile kann eine Mikroprozessoreinrichtung verwendet werden, die dann in der zentralen Steuereinrichtung Z angeordnet ist und die die Signale aller Empfangseinrichtungen digital erhält, oder es kann jede Empfangseinrichtung mit einer digitalen Signalverarbeitung mittels Mikroprozessor vorgesehen sein, die der Zentraleinrichtung Z dann nur noch die entsprechenden Druckwerte für das jeweilige Rad und Informationen zur Radposition liefert.

Die Reifendruckdaten werden auf einer Anzeigeeinheit A dem Fahrer angezeigt oder, alternativ dazu, beim Starten des Fahrzeugs kurz angezeigt, um zu bestätigen, daß die Einrichtung in Ordnung ist und wird dann nur angezeigt, wenn der Reifendruck eines dieser Räder unter oder über einem vorbestimmten Grenzwert liegt.

Im Unterschied zu der Gestaltung gemäß der WO 93/16891 ist bei der erfindungsgemäßen Vorrichtung eine Antenne vorgesehen, die unmittelbar in die Lauffläche des Reifens integriert ist. Figur 2 zeigt einen Reifen 20, in welchen die Antenne 21 in mehreren parallel zueinander angeordneten Windungen verlegt ist. Die Antenne besteht aus einem elektrisch isolierten Draht. Vorzugsweise ist die Antenne unmittelbar in die Lauffläche des Reifens einvulkanisiert, wodurch dann, wenn das Reifenmalterial entsprechende elektrische Widerstandswerte aufweist auch eine elektrische Isolierung zumindest innerhalb der einvulkanisierten Fläche entfallen kann.

Die Sendeeinrichtung, die sehr klein gestaltet werden kann, wird bei diesem Ausführungsbeispiel ebenfalls in die Lauffläche einvulkanisiert, es ist aber auch möglich, die Sendeeinrichtung in die Seitenflanken des Reifens mit anzuordnen.

Das Einvulkanisieren oder das Befestigen der Sendeeinrichtung in der Lauffläche des Reifens hat jedoch den Vorteil, daß die Lauffläche bei der Montage des Reifens weniger stark beansprucht wird als die Seitenflanken, so daß die mechanische Belastung bei der Montage günstiger ist. Auf der anderen Seite sind die wirkenden Fliegkräfte und auch die auf die Empfangseinrichtung wirkenden Stöße größer, wenn die Lauffläche als Träger für die Empfangseinrichtung dient.

Es ist ebenfalls möglich, die Empfangseinrichtung ortsfest in der Radfelge anzuordnen. In diesem Fall muß jedoch berücksichtigt werden, daß sich der Reifen relativ zur Felge verschieben kann. Dies kann geschehen, indem ein entsprechend langes Zuleitungskabel von der Antenne z.B. zu einer Sendeeinrichtung angeordnet wird, die am Ventilloch befestigt ist. Es ist jedoch ebenfalls denkbar, daß am Reifen ein Kontakt angeordnet wird, der elektrisch mit einem Kontaktstreifen auf der Felge in Verbindung steht, wobei der Kontakt mit der Felge und der Kontaktstreifen mit der Sendeeinrichtung verbunden ist. In diesem Fall wird das Signal auch bei einer Verschiebung des Reifens übertragen.

Die Antenne der Empfangseinrichtung kann eine herkömmliche Antennenspule sein. Stattdessen kann aber auch eine Empfangsantenne verwendet werden mit mehreren Windungen, die konzentrisch zum Rad angeordnet ist und die beispielsweise im Bereich der Scheibenbremse vorgesehen ist. Durch diese Anordnung wird eine besonders gute Energieübertragung gewährleistet.

Die erfindungsgemäße Vorrichtung gemäß dem ersten Ausführungsbeispiel hat eine ganze Anzahl von Betriebsvarianten, die nachfolgend kurz dargestellt werden:

Bei der ersten Variante ist in die Sendeeinrichtung ein Zeitgeberbaustein integriert, der bewirkt, daß das Sendesignal in vorgegebenen Zeitabständen ausgestrahlt wird, wie dies auch in der WO 93/16891 beschrieben ist. Die Empfangseinrichtung empfängt das Signal und leitet es an die Einrichtung Z weiter, wo es weiter verarbeitet wird und ggf. zur Anzeige gebracht wird. Besonders bevorzugt ist zusätzlich zur zeitlichen Abfrage eine Überwachung in der Sendeeinrichtung vorgesehen, welche den Sendebaustein von einem stand-by Modus in den aktiven Sendemodus umschaltet, wenn der Druck im Reifen mit einem Druckgradienten abfällt, der oberhalb eines bestimmten Wertes liegt. Auf diese Weise können beispielsweise Ausstrahlungen alle fünf oder alle zehn Minuten gemacht werden und das Zentralsteuergerät Z prüft jeweils, ob Signale von allen vier Rädern vorliegen und ob diese Signale den vorgegebenen Werten entsprechen. Tritt zwischen den Meßzyklen ein Druckabfall auf, so erkennt dies die Einrichtung im zugeordneten Rad und gibt ein Alarmsignal an die zentrale Steuereinrichtung Z aus. Diese wiederum bewirkt, daß der Fahrer akustisch und/oder optisch über die Anzeigevorrichtung A gewarnt wird.

Auf diese Weise kann auch ein schnell einsetzender Druckabfall zwischen den Meßzyklen zuverlässig erkannt werden.

Bei dieser ersten Variante ist das Identifikationssignal, das die Position der einzelnen Sendeeinrichtungen identifiziert, jeweils in der Sendeeinrichtung und in der zugehörigen Empfangseinrichtung abgespeichert. Werden neue Räder montiert, so werden die zentrale Steuereinrichtung und die einzelnen Empfangseinrichtungen in einem Paarungsmodus umgeschaltet. Die Geräte empfangen dann das jeweils zugeordnete Signal, und speichern das darin enthaltene Identifikationssignal ab. Um das Signal übertragen zu können, verfügt jedes der Empfangsgeräte E1 bis E4 über ein Identifikationssteuersignal, welches einen entsprechenden Paarungsversuch, der ebenfalls das Identifikationssteuersignal enthält, der jeweils zugeordneten Sendeeinrichtung erkennt und das zugehörige Identifikationssignal in der jeweiligen Empfangseinrichtung abspeichert.

Bei einer zweiten Variante sendet jede Sendeeinrichtung in regelmäßigen Zeitabständen Identifikationssteuersignale und ihr Identifikationssignal aus. Diese Identifikationssteuersignale werden von den zugeordneten Empfangseinrichtungen empfangen. Nach einer bestimmten Anzahl von empfangenen Identifikationssteuersignalen mit gleichem Identifkationssignal erkennt die Empfangseinrichtung, daß das Signal von der zugeordneten Sendeeinrichtung stammt und speichert das mitübertragene Identifikationssignal im entsprechenden Speicher der Empfangseinrichtung ab. Auf die Art und Weise werden Sendeeinrichtungen und zugeordnete Empfangseinrichtungen gepaart, ohne daß es einer manuellen Umschaltung oder eines Zutuns des Benutzers bedürfte.

Eine dritte Variante funktioniert entsprechend wie die zweite Variante. Hier überprüfen die zugeordneten Empfangseinrichtungen aber zusätzlich, ob sich das Fahrzeug in Bewegung befindet. Eine Identifikation findet nur statt, wenn das Fahrzeug sich bewegt und Identifikationssteuersignale mit dem neuen Identifikationssignal regelmäßig empfangen werden.

Bei einer vierten Variante, die mit der dritte Variante kombiniert werden kann, überprüft die Empfangseinrichtung regelmäßig, ob das bislang zugeordnete Identifikationssignal weiterhin empfangen wird. Wird das Identifikationssignal nicht mehr empfangen, gibt die Empfangseinrichtung ein entsprechendes Signal an die zentrale Steuereinrichtung, die wiederum über die Anzeigeneinrichtung ein Signal an den Benutzer ausgibt, um ihm mitzuteilen, daß das Signal nicht mehr empfangen wird. Mit dieser Anzeige ist vorzugsweise die Anfrage verbunden, ob ein Wechsel des jeweiligen Rades stattgefunden hat. Wird dies vom Benutzer bestätigt, wird das zwischen den Drucksignalen ausgestrahlte Identifikationssteuersignal ausgewertet, und das mit dem Identifikationssteuersignal übertragene Signal als neues Identifikationssignal in der jeweiligen Empfangseinrichtung abgespeichert.

Diese vierte Variante hat den Vorteil, daß sie zwar nicht automatisch funktioniert, daß sie aber sicherstellt, daß tatsächlich ein Wechsel der Reifen stattgefunden hat. Ist die Identifikation oder die Sendeeinrichtung in irgend einer Weise nicht in Ordnung, weiß der Benutzer aus der Anzeige, daß eine Fehlfunktion vorliegt, wenn er den Reifen tatsächlich nicht gewechselt hat.

Eine fünfte Variante entspricht im wesentlichen der zweiten Variante. Bei dieser fünften Variante sendet jede Sendeeinrichtung in regelmäßigen Zeitabständen Signale aus, wobei diese Signale zum einen das Identifikationssignal der jeweiligen Sendeeinrichtung und die Daten, insbesondere Druck und vorzugsweise auch die Temperatur, enthalten. Wird eine Batterie in der Sendeeinrichtung verwendet, kann auch ein Batteriestatussignal mit übertragen werden, was auch bei allen anderen Varianten möglich ist. Wird bei dieser Variante das Rad gewechselt, so empfängt die Empfangseinrichtung, sobald das neue Rad montiert worden ist, nicht mehr das Identifikationssignal der Sendeeinrichtung des zuvor verwendeten Rades. Stattdessen wird ein Signal empfangen, das das neue Identifikationssignal enthält. Nach einer vorbestimmten Anzahl von empfangenen Signalen, wird das neue Identifikationssignal von der jeweiligen Empfangseinrichtung akzeptiert und der jeweiligen Radposition, an der sich die Empfangseinrichtung selbst, bzw. die Antenne der Empfangseinrichtung befindet, zugeordnet. Dabei wird vorzugsweise auch die Intensität des empfangenen Signales beurteilt, um sicherzustellen, daß das Signal nicht von einem anderen Rad stammt. Statt der Beurteilung der Intensität des empfangenen Signales kann die Intensität des ausgestrahlten Signales in Abstimmung zu der jeweiligen Antenne auch so ausgewählt sein, daß die Reichweite nicht ausreichend ist, um von den Antennen in den anderen Radpositionen empfangen zu werden. Um Fehler in der Zuordnung der Radposition zu vermeiden, ist es jedoch zu bevorzugen, daß ein Schwellwert der Signalintensität abgefragt wird, um festzustellen, ob es sich tatsächlich um das Signal des jeweils zuzuordnenden Rades handelt.

Weiterhin ist der große Vorteil dieser Gestaltung, daß sie in der Werkstatt nach einer Änderung der Reifenbestückung des Fahrzeuges durchgeführt werden kann. Es muß bei dieser Variante nicht die Fahrt des Autos mit überprüft werden, um eine Fehlidentifikation durch nebenstehende Fahrzeuge zu vermeiden.

Bei einer sechsten Variante ist die Sendeeinrichtung etwas anders aufgebaut, als zuvor beschrieben. Hier verfügt die Sendeeinrichtung zusätzlich über die Möglichkeit, auch Signale zu empfangen. Bei dieser Variante gibt die Sendeeinrichtung immer dann ein Signal aus, wenn die Empfangseinrichtung eine entsprechende Aufforderung an das Sendegerät richtet.

Werden bei dieser Variante die Räder gewechselt, so wird z.B. über das Anzeigegerät eine Eingabe eingegeben, daß eine neue Identifikation vorgenommen werden muß. Die Empfangseinrichtungen geben dann nacheinander die Identifikationssteuersignale aus, die von den jeweiligen Sendeeinrichtungen erkannt werden und bewirken, daß die Sendeeinrichtungen ihrerseits ein Identifikationssteuersignal mit ihrer Identifikation an die Empfangseinrichtung übertragen.

Aufgrund des guten Wirkungsgrades der Energieübertragung kann diese sechste Variante auch als siebte Variante abgewandelt dazu verwendet werden, Energie an die Sendeeinrichtung im Rad zu übertragen. In diesem Fall wird die durch die Antenne aufgenommene elektrische Energie beispielsweise in Kondensatoren gespeichert und dient dann zur Stromversorgung der Sendeeinrichtung. Die Sendeeinrichtung strahlt dann vorzugsweise immer ein Signal aus, wenn sie von der Empfangseinrichtung entsprechend angeregt worden ist. Zusätzlich kann mit dieser Variante auch so viel Energie gespeichert werden, daß die Ausgabe eines Alarmsignals bei plötzlichem Druckabfall weiterhin möglich ist.

Die vorbeschriebene siebte Variante kann bezüglich der verschiedenen Möglichkeiten der Identifikation auch mit den Varianten eins bis sechs kombiniert werden.

Bei einer achten Variante, die ebenfalls mit den vorstehend beschriebenen Varianten (soweit technisch sinnvoll) kombiniert werden kann, wird ebenfalls eine automatische Zuordnung des Identifikationssignals zur Radposition vorgenommen. Auch in diesem Fall sind in der Nähe jedes Rades individuelle Empfangseinrichtungen angeordnet oder zumindest Antennen, die mit der Empfangseinrichtung verbunden sind. Zusätzlich ist hier jedoch ein Sensor vorgesehen, der erfaßt, wenn eine Radwechsel stattfindet. Das Signal dieses Sensors wird der individuellen oder gemeinsamen Empfangseinrichtung bzw. der Steuereinrichtung zugeführt, so daß die jeweilige Einrichtung anschließend über die Information verfügt, daß eine Identifizierung stattfinden muß.

Für die Sensoren kommen verschiedene Möglichkeiten in Betracht. Am einfachsten ist es, einen Mikroschalter oder dergleichen vorzusehen, der feststellt, wenn das Rad von der Radnabe abgenommen wird oder wenn beispielsweise eine Radschraube gelöst wird. Ein solcher Sensor kann sehr einfach gestaltet sein, es besteht hier jedoch der Nachteil, daß die Radnabe und ihre Befestigungen sich mit dem Rad drehen.

Um eine Information über den Radwechsel zu erhalten, können aber auch Sensoren an nicht-drehenden Teilen der Karosserie angeordnet werden, und zwar insbesondere an Teilen der Radaufhängung. Bei einem Radwechsel muß das Rad in jedem Fall in vollem Umfang entlastet werden, wodurch auch die Radaufhängung, bestehend aus den einzelnen Lenkern, Stoßdämpfer, Feder usw. entlastet wird. Mit einem Kraftsensor kann beispielsweise die Belastung im Stoßdämpfer gemessen werden und festgestellt werden, daß der Stoßdämpfer entlastet ist. Die Verwendung eines solchen Sensors hat den Vorteil, daß er bei Fahrwerken mit elektronischer Steuerung der Dämpfungscharakteristik ohnehin im Fahrzeug vorgesehen ist.

Alternativ dazu kann aber auch ein Mikroschalter verwendet werden, der in Verbindung mit der Feder oder mit einem sonstigen Teil der Aufhängung steht, und der so angeordnet ist, daß er betätigt wird, wenn das jeweilige Teil der Aufhängung durch die Entlastung in eine Entlastungsposition bewegt wird. Da eine solche Entlastung kurzfristig auch durch die kinematische Fahrwerksänderung bei der Fahrt hervorgerufen werden kann, ist es zweckmäßig, das Sensorsignal über einen längeren Zeitraum, beispielsweise mehrere Sekunden oder Minuten, zu beobachten, um festzustellen, ob es sich tatsächlich um eine statische Entlastung handelt. Stattdessen kann auch geprüft werden, ob sich das Fahrzeug in Bewegung befindet, eine Information, die durch entsprechende Sensoren, wie beispielsweise die Radsensoren einer ABS-Einrichtung, im Fahrzeug ohnehin zur Verfügung steht.

Eine weitere Anordnung der Antenne, welche mit allen vorgenannten Varianten in gleicher Weise wie das Ausführungbeispiel gemäß Figur 2 verwendet werden kann, zeigt die Figur 3. Hier ist die Antenne in die Seitenflanke des Reifens integriert, wodurch die einzelnen Windungen nicht nebeneinander sondern in praktisch konzentrischen oder spiralförmigen Ringen übereinander liegen. Auch hier wird vorteilhafterweise eine entsprechend gestaltete konzentrisch angeordnete Antenne für die Empfangseinrichtung verwendet.

Figur 4 zeigt eine entsprechende Gestaltung der Antenne, wobei hier allerdings die einzelnen Windungen in der Radaußenseite angeordnet und dort in die Reifenfläche einvulkanisiert sind.

Verschiedene Formen, die Antennen am Rad oder im Rad oder auf der Felge zu befestigen, zeigen die Figuren 5, 6 und 7.

Bei der Figur 5 sind mehrere Antennenwindungen von einem Schlauch umhüllt, der beispielsweise auf eine Felge aufgewickelt werden kann.

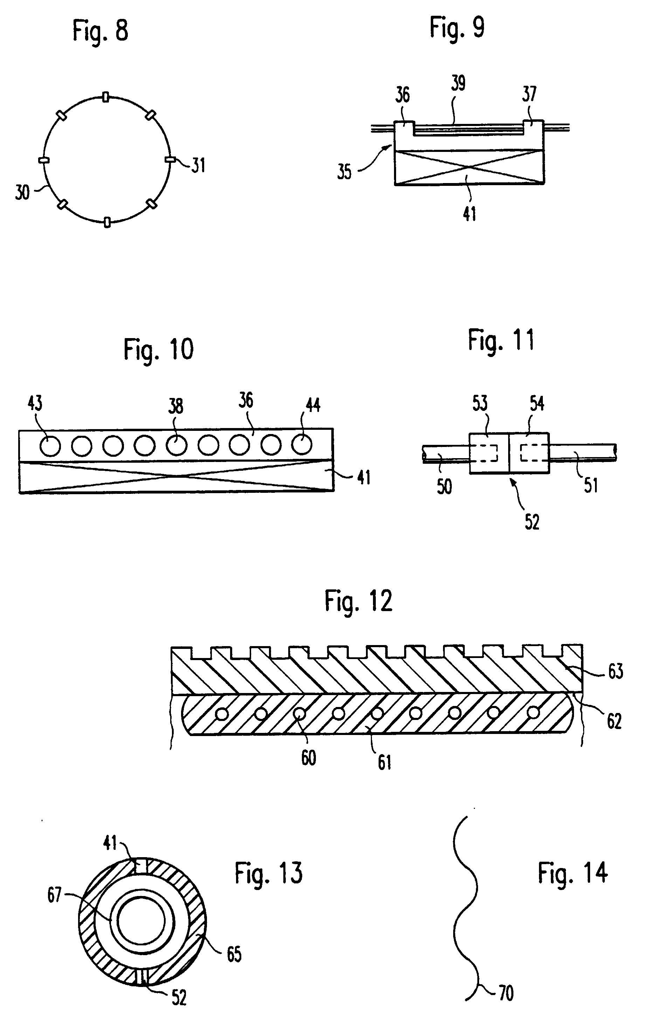

Figur 6 zeigt eine zylindrische Anordnung von nebeneinander liegenden Windungen, die ebenfalls beispielsweise auf eine Felge aufgewickelt befestigt werden kann.

Figur 7 zeigt schließlich eine scheibenförmige Anordnung, wie sie auch bei den Gestaltungen gemäß Figur 3 und Figur 4 verwendet werden kann, und die beispielsweise in der Seitenflanke einer Felge befestigt werden kann.

Ein weiteres Ausführungsbeispiel der erfindungsgemäßen Vorrichtung wird nun in bezug auf Figuren 8 bis 10 beschrieben.

Bei diesem Ausführungsbeispiel besteht die Antenne aus einem elastischen Draht, der entweder selbst elektrisch leitend ist, also beispielsweise aus Stahl oder Kupfer oder dergleichen besteht, oder der zumindest ein elektrisch leitendes Element enthält. Dies kann beispielsweise ein drahtartiger Kunststoffstab oder ein Kunststoffröhrchen sein, welches ein elektrisch leitendes Kabel enthält. Wesentlich ist bei diesem Ausführungsbeispiel die Fähigkeit der Elastizität.

Der so definierte Draht wird im Reifen spiralförmig zusammengewickelt und hat aufgrund seiner elastischen Eigenschaft das Bestreben, den Durchmesser zu vergrößern. Dadurch entsteht eine nach außen gerichtete Anpreßkraft, mit der der Draht an der Innenseite der Lauffläche des Rades anliegt. Vorzugsweise enthält die Spirale acht oder mehr Windungen.

Durch die elastische Eigenschaft wird die so gebildete Spirale im Reifen gehalten, ohne daß es irgendeiner weiteren Abstützung bedürfte. Der Einbau ist ebenfalls besonders einfach, da zum Einbau die Spirale lediglich auf einen geringeren Umfang gebracht werden muß, der es erlaubt, die Spirale in den Reifen einzulegen, worauf sie dann sich aufgrund ihrer elastischen Fähigkeit ausdehnt, um an der Lauffläche anzuliegen.

Falls als Spirale ein elektrisch leitender Draht ohne Isolierung verwendet wird oder falls die Spirale in bezug auf die Reifenlauffläche genau festgelegt werden soll, können in regelmäßigen Abständen, wie dies in Fig. 8 dargestellt ist, zusätzliche Verbindungs- und Halteelemente verwendet werden. Fig. 8 zeigt in einer Seitenansicht die gewickelte Spirale 30, die in regelmäßigen Abständen Verbindungseinrichtungen trägt, die mit 31 bezeichnet sind.

Die Verbindungseinrichtung besteht vorzugsweise aus einem länglichen, runden oder quadratischen Kunststoffkörper, in dem benachbart eine Reihe von Bohrungen angeordnet ist, wie dies ähnlich in Fig. 10 für den Steg 36 dargestellt ist.

Die Fig. 9 und 10 zeigen eine Halteeinrichtung zur Verbindung mit der in Fig. 8 gezeigten Antenne, welche dafür vorgesehen ist, eine Sendeeinrichtung mit der Antenne zu verbinden.

In diesem Fall besteht die Halteeinrichtung ebenfalls aus einem Kunststoffkörper 35, der im wesentlichen quaderförmig gestaltet ist und der einen ersten Steg 36 und einen zweiten Steg 37 aufweist. In den Stegen 36 und 37 sind eine Reihe von Bohrungen 38 vorgesehen, durch welche sich der elastische Draht 39 hindurch erstreckt. Beim Ausführungsbeispiel sind insgesamt neun Bohrungen vorgesehen, so daß die Spirale neun Windungen aufweisen kann.

An der Halteeinrichtung 35 ist, schematisch dargestellt, die Sendeeinrichtung 41 befestigt. Dabei erfolgt die Befestigung in der Weise, daß die Sendeeinrichtung mit dem Anfang und dem Ende der spiralförmigen Antenne verbunden ist. Dies kann auf einfache Weise geschehen, indem die erste Bohrung 43 und die zweite Bohrung 44 in der Halteeinrichtung 35 im elektrischen Kontakt mit der Sendeeinrichtung stehen.

Statt einer Halteeinrichtung 35 können die Enden der Spiralen auch mit entsprechenden Einrichtungen, beispielsweise mit einer Öse, versehen werden, die es erlaubt, die Sendeeinrichtung an der Spirale zu montieren.

Eine solche Öse oder eine entsprechende Einrichtung, die es erlaubt, die Sendeeinrichtung an der Antenne zu befestigen, kann im übrigen auch dann verwendet werden, wenn die Antenne in die Lauffläche oder in die Seitenflanke des Reifens einvulkanisiert ist. In diesem Fall wird die Antenne so geformt und der Vulkanisationsprozeß derart gesteuert, daß die Befestigungseinrichtung, also beispielsweise die Öse, nach dem Vulkanisieren aus dem Gummi nach innen vorsteht.

Die Länge des Drahtes und damit die Länge der Spirale braucht nicht exakt so gewählt zu werden, daß beide Drahtenden genau innerhalb einer Halteeinrichtung liegen. Die Drahtenden können vielmehr auch um ein Stück über die jeweilige Halteeinrichtung hinausragen, so daß sich praktisch ein freies Ende der Antenne ergibt. Diese Gestaltung hat auch den Vorteil, daß die Länge des Drahtes nicht exakt an den Innendurchmesser des Reifens angepaßt werden muß. Es ist deshalb möglich, mit ein und derselben spiralförmigen Antenne Reifen mit unterschiedlichen Durchmessern zu verwenden.

Der Vorteil dieser Ausführungsform ist, daß Antenne und Sendeeinrichtung in den Reifen eingebracht werden, ohne daß es irgendeiner Modifikation von Reifen oder Felge bedüfte. Da die Montage letztendlich nur in einem Aufschnellenlassen der spiralförmigen Antenne besteht, ist sie besonders einfach und schnell durchführbar. Auch ein Ersatz einer defekten Einrichtung kann ohne Probleme erfolgen, zudem gibt es keine Schwierigkeiten bei der Reifenmontage oder - demontage.

Eine alternative Ausführungsform einer solchen spiralförmigen Antenne ist in Fig. 11 dargestellt. Hier besteht die Antenne ebenfalls aus einem Draht im zuvor definierten Sinn. Der Draht ist aber hier nicht spiralförmig gewickelt, sondern besteht aus einzelnen geteilten Ringen, die derart geformt sind, daß sie dazu tendieren, einen kleineren Durchmesser einzunehmen. Die Enden 50, 51 jedes Ringes werden in eine Verbindungseinrichtung 52 eingeschoben oder befestigt, die aus einem ersten Steckteil 53 und aus einem zweiten Steckteil 54 besteht. Jedes Steckteil 53, 54 ist so ausgebildet, daß es acht oder mehr Ringe 50, 51 parallel zueinander aufnehmen kann.

Die Steckverbindungseinrichtung 52 enthält Einrichtungen, um die einzelnen Ringe 50, 51 elektrisch miteinander zu verbinden, so daß eine elektrische Spule entsteht.

Die einzelnen Ringe 50, 51 sind in der Weise vorgespannt, daß sie dazu tendieren, einen kleineren Durchmesser einzunehmen, als es dem Innendurchmesser des Reifens entspricht. Auf der anderen Seite ist die Länge der Ringe derart bestimmt, daß der Außendurchmesser des Ringes im vorgespannten Zustand, d.h. im Zustand, in dem die Steckverbindungen 53, 54 miteinander verbunden sind, einen Außendurchmesser aufweisen, der geringfügig größer ist, als der Innendurchmesser des Reifens.

Zur Montage werden die Steckverbindungen 53, 54 gelöst, wodurch die Antenne aufgrund ihrer Elastizität einen Durchmesser aufweist, der kleiner ist als der kleinste Innendurchmesser des Reifens. Dadurch kann die Antenne bequem in den Reifen eingelegt werden. Im Reifen wird die Antenne dann ausgedehnt und die Steckeinrichtungen 53, 54 verbunden. Aufgrund der Durchmesserdifferenz entsteht dadurch eine Vorspannung durch die Reifeninnenwand auf die Antenne, die für einen sicheren Halt der Antenne im Reifen sorgt.

Die Sendeeinrichtung kann in die Steckeinrichtung 53, 54 integriert werden, sie kann jedoch auch an einer anderen Stelle, vorzugsweise um 180° versetzt zur Steckeinrichtung, angeordnet sein.

Ein weiteres Ausführungsbeispiel wird nun in Fig. 12 beschrieben. Dieses Ausführungsbeispiel kann einmal als sich nach außen öffnende Spirale ausgebildet sein, wie es in Fig. 8, 9 und 10 dargestellt ist, oder durch eine Anordnung von einzelnen Ringen, wie sie in Fig. 11 dargestellt ist. Die einzelnen Windungen der Antenne 60 sind hier in einen Körper 61 eingebettet, der an der Innenwand 62 des Reifens 63 anliegt. Insgesamt ergibt sich daraus ein zylindrischer Körper 65, wie er in der Schnittdarstellung gemäß Fig. 13 dargestellt ist, der an der (in Fig. 13 nicht dargestellten) Innenwand des Reifens anliegt, andererseits ausreichenden Abstand zu einer symbolisch dargestellten Felge 67 aufweist.

Für dieses Ausführungsbeispiel gibt es verschiedene Gestaltungsmöglichkeiten:

Bei einer bevorzugten Gestaltung ist die Antenne gemäß dem Ausführungsbeispiel nach Fig. 11 ausgeführt, weist also eine Steckverbindungseinrichtung 52 auf. Die Drähte sind in ein Schaumstoffmaterial 61 eingebettet, wobei dieses Material einerseits die einzelnen Windungen elektrisch voneinander isoliert und auf der anderen Seite einen Abstand zwischen den Antennenwindungen und der Innenseite der Reifenflanke schafft. Die einzelnen Drahtringe der Antenne sind so dimensioniert, daß der elastische Körper 61 in der Anlage am Reifen 62 zumindest geringfügig verformt wird.

Diese Ausführungsform hat den Vorteil, daß die Antenne zwar in bezug auf den Reifen festgelegt ist, daß aber die Verbindung zwischen Reifen und Antenne elastisch ist. Die einzelnen Stöße, die durch die Lauffläche in den Reifen eingebracht werden, werden so in bezug auf die Antenne und in bezug auf die damit verbundene Sendeeinrichtung gedämpft. Der elastische Körper kann beispielsweise aus Schaumgummi oder einem ähnlichen geeigneten Material bestehen. Er kann in Radialrichtung des Reifen gemessen mehrere Zentimeter oder aber auch nur mehrere Millimeter dick sein.

Bei einer anderen Variante ist der Körper 61 selbst nicht oder nur in geringem Umfang elastisch und dient lediglich dazu, die Antenne in Spirale zu halten. In diesem Fall werden die elastischen Haltekräfte des Ringes oder der Spirale im Reifen ausschließlich durch den Stahldraht aufgebracht. Bei dieser Ausführung kann auch zusätzlich oder alternativ eine Klebeverbindung zwischen der Lauffläche und dem Körper 61 vorgesehen werden.

Fig. 14 zeigte eine Abwandlung der in bezug auf die Fig. 8 bis 13 beschriebenen Ausführungsbeispiele. Während bei den genannten Ausführungsbeispielen davon ausgegangen wurde, daß die einzelnen Drähte entlang eines im wesentlichen exakten geometrischen Kreises verlaufen, sind hier die Drähte 70 in Umfangsrichtung oder in Radialrichtung des Reifens schlangenlinienförmig gebogen. Statt der Schlangenlinienform kommt auch eine andere Biegeform in Betracht. Eine derartige Gestaltung des Drahtes hat den Vorteil, daß die elastischen Haltekräfte der Spirale oder der Ringe im Reifen erhöht werden und daß einzelne Stöße auf den Draht durch die Lauffläche nicht zu einer wesentlichen Verformung des Drahtes und zur Beeinträchtigung der elastischen Spannung führen.

Bei einer weiteren Variante, die insbesondere mit der Ausführungsform gemäß Fig. 14, aber auch mit den anderen Ausführungsformen gemäß Fig. 8 bis 13 verwendet werden kann, werden die elastischen Haltekräfte erhöht, indem der Reifen zunächst auf einen Druck aufgepumpt wird, der deutlich über dem üblichen Verwendungsdruck liegt. Dadurch erhöht sich der Innendurchmesser des Reifens und die Antenne legt sich aufgrund der elastischen Eigenschaften an diesen Innendurchmesser des Reifens an. Die Antenne wird gleichzeitig derart gestaltet, daß eine Verminderung des Durchmessers nach der Montage, insbesondere durch Reibung, mit Halteelementen oder dergleichen erheblich erschwert ist. Wird der Druck des Reifens dann auf den üblichen Wert vermindert, reduziert sich sein Durchmesser, wodurch die Antenne dann stärker elastisch vorgespannt wird.

Bei allen vorgenannten Ausführungsbeispielen haben die Antennen den Vorteil, daß die Antenne konzentrisch zum Radmittelpunkt angeordnet ist. Dies bedeutet, daß die Antenne in elektrischer Hinsicht ihre Position auch dann beibehält, wenn das Rad rotiert. Dadurch ist die Signalübertragung von der jeweiligen Position des Rades unabhängig. Letzteres gilt insbesondere dann, wenn als Empfangsantenne ebenfalls eine konzentrisch zum Radmittelpunkt angeordnete Antenne verwendet wird.

Diese Antennengestaltung hat elektrisch wesentliche Vorteile. Da sich die Position durch die Rotation nicht ändert, steht zur Übertragung des Signals relativ viel Zeit zur Verfügung. Dadurch ist es möglich, langwellige Signalübertragungsfrequenzen mit Frequenzen unter 50 KHz zu verwenden, welche die übrigen elektrischen und elektronischen Einrichtungen des Autos nicht stören.

Wird die Antenne z.B. unmittelbar am Ventil angeordnet, so muß bei manchen Ausführungsformen eine sehr hohe Frequenz gewählt werden damit die gesamte Signalübertragung so schnell abläuft, daß die Positionsänderung des Rades infolge der Drehung keinen Einfluß auf die Signalübertragung hat.

## Patentansprüche

1. Vorrichtung zur Überwachung des Luftdruckes in der Luftkammer von luftbereiften Fahrzeugrädern mit
einer am Fahrzeugrad (R1, R2, R3, R4) angeordneten Druckmeßeinrichtung, welche den Druck in der Luftkammer des Rades erfaßt und ein für den Druck repräsentatives elektrisches Drucksignal ausgibt;
einer am Fahrzeugrad angeordneten Sendeeinrichtung (S1, S2, S3, S4), welche das von der Druckmeßeinrichtung ausgegebene Drucksignal aufnimmt und ein diesem entsprechendes Drucksendesignal aussendet;
einer im Abstand zum Fahrzeugrad angeordneten Empfangseinrichtung (E1, E2, E3, E4), welche das von der Sendeeinrichtung (S1, S2, S3, S4) ausgestrahlte Sendesignal empfängt;
sowie mit einer Antenne (21, 60), die nicht in die Sendeeinrichtung integriert, sondern in elektrischer Verbindung mit der Sendeeinrichtung (S1, S2, S3, S4) steht, aber unabhängig von dieser im Rad (R1, R2, R3, R4) angeordnet ist,
dadurch gekennzeichnet,
daß diese Sendeeinrichtung (S1, S2, S3, S4) einen Stand-by-Modus aufweist, in welcher dieses Drucksendesignal in vorbestimmten zeitlichen Abständen an diese Empfangseinrichtung (E1, E2, E3, E4) übermittelt wird und daß in dieser Sendeeinrichtung (S1, S2, S3, S4) weiterhin eine Überwachungseinheit angeordnet ist, welche diese Sendeeinrichtung (S1, S2, S3, S4) in einen aktiven Sendemodus umschaltet, sobald der Druck im Reifen (20) mit einem Druckgradienten abfällt, der oberhalb eines vorbestimmten Wertes liegt.

2. Vorrichtung gemäß Anspruch 1, dadurch gekennzeichnet, daß diese Antenne (21, 60) in bezug auf die Lauffläche des Reifens (20) festgelegt ist, vorzugsweise an dieser befestigt oder in diese einvulkanisiert ist.

3. Vorrichtung gemäß Anspruch 1, dadurch gekennzeichnet, daß diese Antenne (21, 60) in bezug auf eine der Reifenseitenflanken festgelegt ist und vorzugsweise an dieser befestigt oder in diese einvulkanisiert ist.

4. Vorrichtung gemäß Anspruch 2 oder 3, dadurch gekennzeichnet, daß die Sendeeinrichtung (S1, S2, S3, S4) ebenfalls in bezug auf den Reifen (20) festgelegt ist und vorzugsweise an der Lauffläche oder an der Seitenflanke des Reifens befestigt oder in diese einvulkanisiert ist.

5. Vorrichtung gemäß Anspruch 1, dadurch gekennzeichnet, daß eine Umwandlungseinrichtung vorgesehen ist, die die von der Sendeeinrichtung zu übertragenden Signale digital codiert.

6. Vorrichtung gemäß einem der vorhergehenden Ansprüche, dadurch gekennzeichnet, daß diese Sendeeinrichtung (S1, S2, S3, S4) mit dem Drucksignal ein Identifikationssignal aussendet, das diese Druckmeßeinrichtung eindeutig identifiziert, und daß diese Empfangseinrichtung (E1, E2, E3, E4) dieses ausgestrahlte Identifikationssignal erkennt und das Signal nur dann weiter verarbeitet bzw. an die Zentralsteuereinrichtung (Z) weiterleitet, wenn das empfangene Identifikationssignal einer bestimmten Charakteristik entspricht.

7. Vorrichtung gemäß Anspruch 6, dadurch gekennzeichnet, daß das Identifikationssignal in der Sendeeinrichtung (S1, S2, S3, S4) als digitale Zahlenfolge mit n Bits abgespeichert ist und daß das Identifikations-Vergleichssignal im Empfänger ebenfalls als digitale Zahlenfolge mit n Bits abgespeichert ist.

8. Vorrichtung gemäß mindestens einem der Ansprüche 6 oder 7, dadurch gekennzeichnet, daß das in der Empfangseinrichtung (E1, E2, E3, E4) abgespeicherte Identifikations-Vergleichssignal veränderbar ist, um das Identifikationssignal und das Identifikations-Vergleichssignal von Sende(S1, S2, S3, S4) und Empfangseinrichtung (E1, E2, E3, E4) einander anzupassen.

9. Vorrichtung gemäß mindestens einem der Ansprüche 1 bis 8, dadurch gekennzeichnet, daß die Übertragung der Signale von der Sendeeinrichtung (S1, S2, S3, S4) zur Empfangseinrichtung (E1, E2, E3, E4) mit elektromagnetischen Wellen (Rundfunkwellen) konstanter Frequenz als Trägerwellen erfolgt.

10. Vorrichtung gemäß Anspruch 9, dadurch gekennzeichnet, daß die Frequenz der elektromagnetischen Trägerwellen im Langwellenbereich, bevorzugt zwischen 4 und 100 Kilohertz, besonders bevorzugt zwischen 4 und 50 Kilohertz und ganz besonders bevorzugt zwischen 4 und 15 Kilohertz liegt.

11. Kontrollvorrichtung gemäß Anspruch 7 oder 8, dadurch gekennzeichnet, daß die Übertragung der Daten über eine Veränderung der Phasenlage eines sinusförmigen Trägersignals (phase shift keying) und bevorzugt über eine differentiale Veränderung der Phasenlage (differential phase shift keying) erfolgt.

12. Kontrollvorrichtung gemäß mindestens einem der Ansprüche 1 bis 11, dadurch gekennzeichnet, daß die Sendeeinrichtung (S1, S2, S3, S4) eine Zeitgebereinheit aufweist und derart gesteuert ist, daß die Druckmeßeinrichtung den Druck in vorgegebenen, im wesentlichen festen Zeitintervallen mißt.

13. Vorrichtung gemäß mindestens einem der Ansprüche 1 bis 12, dadurch gekennzeichnet, daß die Sendeeinrichtung (S1, S2, S3, S4) eine Detektoreinrichtung aufweist, welche ein von der Empfangseinrichtung (E1, E2, E3, E4) ausgestrahltes Signal erkennt und welche beim Auftreten dieses Signals die Sendeeinrichtung (S1, S2, S3, S4) von einem passiven Standby-Modus in einen Aktiven Sende-Modus umschaltet, damit eine Druckmessung durchgeführt und das Sendesignal ausgestrahlt wird.

14. Kontrollvorrichtung gemäß Anspruch 13, dadurch gekennzeichnet, daß jeder an einem Fahrzeugrad (R1, R2, R3, R4) des Kraftfahrzeuges angeordneten Druckmeß- und -sendeeinrichtung eine Empfangseinrichtung (E1, E2, E3, E4) zugeordnet ist, wobei die von der Empfangseinrichtung (E1, E2, E3, E4) empfangenen Signale zu einer zentralen Anzeigeeinrichtung (A) geführt sind.

15. Vorrichtung gemäß mindestens einem der Ansprüche 6 bis 14, dadurch gekennzeichnet, daß die Empfangseinrichtung (E1, E2, E3, E4) mit einer Schalteinrichtung verbunden ist, welche ein Umschalten der Empfangseinrichtung (E1, E2, E3, E4) vom normalen Betriebsmodus, in dem der Luftdruck kontrolliert wird, in einen Paarungsmodus ermöglicht, in welchem die Empfangseinrichtung (E1, E2, E3, E4) das Identifikationssignal jeder Sendeeinrichtung (S1, S2, S3, S4) aufnimmt und als Identifikations-Vergleichssignal, bevorzugt mit einer Zuordnung der jeweiligen Radposition, abspeichert.

16. Vorrichtung gemäß Anspruch 15, dadurch gekennzeichnet, daß jede Sendeeinrichtung (S1, S2, S3, S4) eine Detektoreinrichtung aufweist, welche die Ausstrahlung eines vorgegebenen Umschaltsignals erkennt und darauf die Sendeeinrichtung (S1, S2, S3, S4) in einen Paarungsmodus umschaltet, in welchem das Identifikationssignal und ein den Paarungsmodus anzeigendes Zusatzsignal ausgestrahlt wird.

17. Vorrichtung gemäß einem der vorhergehenden Ansprüche, dadurch gekennzeichnet, daß am Fahrzeugrad (R1, R2, R3, R4) weiterhin eine Temperaturmeßeinrichtung vorgesehen ist, welche die Temperatur in der Luftkammer des Rades (R1, R2, R3, R4) erfaßt, und daß diese Sendeeinrichtung (S1, S2, S3, S4) das von der Temperaturmeßeinrichtung ausgegebene Drucksignal aufnimmt und ein entsprechendes Temperatursignal aussendet, welches von der Empfangseinrichtung (E1, E2, E3, E4) empfangen und weiterverarbeitet wird.

18. Vorrichtung gemäß Anspruch 17, dadurch gekennzeichnet, daß eine akustische und/oder optische Warnung ausgegeben wird, wenn die Temperatur in einem der Reifen (20) einen vorgeschriebenen Grenzwert überschreitet oder wenn eine zu hohe Temperaturdifferenz zwischen verschiedenen Reifen (20) desselben Fahrzeugs oder zwischen Reifen- und Umgebungstemperatur festgestellt wird.

19. Vorrichtung gemäß mindestens einem der Ansprüche 1 bis 18, dadurch gekennzeichnet, daß die Antenne (21, 60) als Spirale ausgebildet ist, die durch elastische Kräfte im Reifen gehalten ist.

20. Vorrichtung gemäß Anspruch 19, dadurch gekennzeichnet, daß die Antenne aus einzelnen Ringen (50, 51) besteht, die über eine Steckverbindung (52) zu einer elektrischen Spule verbindbar sind, und die durch elastische Kräfte im Reifen (20) festgelegt sind.

21. Vorrichtung gemäß Anspruch 19 oder Anspruch 20, dadurch gekennzeichnet, daß die einzelnen Windungen (50, 51) der Antenne (21, 60) durch einen vorzugsweise elastischen Körper (61) ummantelt sind.

22. Verwendung der Vorrichtung gemäß mindestens einem der Ansprüche 1 bis 21 bei der Luftbereifung eines Personenkraftwagens und/oder Lastkraftwagens und/oder selbstfahrender Maschinen wie Kräne, Bagger, Baumaschinen, landwirtschaftlicher Maschinen und dergleichen und/oder für die Überwachung der Luftbereifung eines Flugzeuges.

## Claims

1. Device for monitoring the air pressure in the air chamber of pneumatic tires of vehicles comprising:
a pressure measuring system arranged on a vehicle wheel which detects the pressure in the air chamber of the tire and emits a representative electrical pressure signal for the pressure value;
a transmitter arranged on a vehicle wheel which receives the issued pressure signal from the pressure measuring system and sends an appropriate pressure send signal out;
a receiver arranged at a distance from a vehicle wheel which receives the signal transmitted by the transmitter;
as well as an antenna which is not integrated in the transmitter, but rather while being in electrical connection with the transmitter, is arranged independently therefrom in the wheel.

2. Device according to claim 1, characterized in that the antenna is fixed in relation to the tread of the tire, preferably secured or vulcanized thereto.

3. Device according to claim 1, characterized in that
the antenna is fixed in relation to the tire side flanks, and preferably secured or vulcanized thereto.

4. Device according to claim 2 or 3, characterized in that
the transmitter is likewise affixed in relation to the tires, preferably secured on the tread of the tire or side flanks or vulcanised thereto.

5. Device according to claim 1, characterized in that a transformation device is provided which digitally encodes the transmitted signal from the transmitter.

6. Device according to one of the above claims, characterized in that
the transmitter sends out an identification signal with the pressure signal which clearly identifies the pressure measurement system, and that the receiver recognizes this transmitted identification signal and that the signal is only then further processed, forwarded on to the central control unit respectively, when the received identification signal corresponds to a predetermined characteristic.

7. Device according to claim 6, characterized in that the identification signal is stored in the transmitter as a digital series of numbers with n bits and that the identification comparison signal in the receiver is likewise stored as a digital series of numbers with n bits.

8. Device according to at least one of claims 6 or 7, characterized in that
the identification comparison signal stored in the receiver is variable in order to he able to adapt the identification signal and the identification comparison signal from the transmitter and the receiver unit to each other.

9. Device according to at least one of claims 1 to 8, characterized in that
the transmission of the signals from the transmitter to the receiver occurs as carrier waves with electromagnetic waves (radio waves) at a constant frequency.

10. Device according to claim 9, characterized in that the frequency of the electromagnetic carrier waves is in the radio wave band, preferably between 4 and 100 Kilohertz, especially preferably between 4 and 50 Kilohertz, and highly preferably between 4 and 15 Kilohertz.

11. Control device according to claims 7 or 8, characterized in that
the transmission of data results from a change in the phase position of a sine-formed carrier signal (phase shift keying) and preferably from a differential change in the phase position (differential phase shift keying).

12. Control device according to at least one of claims 1 to 11, characterized in that
the transmitter has a time relay unit and is controlled in this manner, that the pressure measuring system measures the pressure in predetermined, essentially fixed time intervals.

13. Device according to at least one of claims 1 to 12, characterized in that
the transmitter has a detector unit which recognizes a transmitted signal from the receiver and which, upon the first occurrence of this signal, switches the transmitter from a passive stand-by-mode into an active send-mode so that a pressure measurement can be taken and the send signal emitted.

14. Control device according to claim 13, characterized in that
each of the pressure measuring and transmitter devices arranged on the vehicle wheel is associated with a receiver, whereby the signal received by the receiver is conveyed on to a central display device.

15. Device according to at least one of claims 6 to 14, characterized in that
the receiver is connected with a switch device which controls the switching of the receiver from normal operating mode, in which the air pressure will be controlled, into a pairing mode, in which the receiver receives the identification signal of each transmitter and stores it as an identification comparison signal, preferably with an association of the respective wheel position.

16. Device according to claim 15, characterized in that each transmitter has a detector device which recognizes the transmission of a predetermined switch signal and thereupon switches the transmitter into a pairing mode in which the identification signal and a shown pairing mode additional signal is emitted.

17. Device according to at least one of the preceding claims, characterized in that
a temperature measurement device is furthermore provided on the vehicle wheel which detects the temperature in the air chamber of the tire, and that the transmitter receives the emitted pressure signal from the temperature measurement device and sends out the appropriate temperature signal, which is then received by the receiver and further processed.

18. Device according to claim 17, characterized in that an audio and/or optical warning is issued when the temperature in one of the tires exceeds a set value or when too large of a temperature discrepancy is ascertained between different tires of the same vehicle or between the tires and the outside environment temperature.

19. Device according to at least one of claims 1 to 18, characterized in that
the antenna is formed as a spiral which is held in the tire by elastic force.

20. Device according to claim 19, characterized in that the antenna is comprised of individual rings which are connectable via a plug connection to an electrical coil and are fixed in the tires through elastic force.

21. Device according to claim 19 or 20, characterized in that
the individual antenna windings are coated with a preferably elastic body.

22. Method for use of the device according to at least one of claims 1 to 21 in pneumatic tires of personal automobiles and/or trucks and/or self-driving machines such as cranes, dredgers, construction machines, agricultural machines and the like, and/or for monitoring the pneumatic tires of airplanes.

## Revendications

1. Dispositif pour surveiller la pression de gonflage dans la chambre à air de roues de véhicules à pneumatiques, comportant :
- Un dispositif de mesure de pression agencé sur la roue de véhicule (R1, R2, R3, R4), qui détecte la pression dans la chambre à air de la roue et qui délivre un signal de pression électrique représentant la pression;
- un dispositif émetteur (S1, S2, S3, S4) agencé sur la roue de véhicule, qui reçoit le signal de pression délivré, par le dispositif de mesure de pression et qui émet un signal d'émission de pression correspondant audit signal;
- Un dispositif récepteur (E1, E2, E3, E4) agencé à distance de la roue de véhicule, qui reçoit le signal d'émission émis par le dispositif émetteur (S1, S2, S3, S4); et
- une antenne (21, 60) qui n'est pas intégrée dans le dispositif émetteur mais qui est en connexion électrique avec le dispositif émetteur (S1, S2, S3, S4) et qui est agencée dans la roue (R1, R2, R3, R4) de façon indépendante dudit dispositif émetteur,
caractérisé en ce que :
ledit dispositif émetteur (S1, S2, S3, S4) présente un mode d'attente dans lequel ledit signal d'émission de pression est transmis à des intervalles temporels prédéterminés audit dispositif récepteur (E1, E2, E3, E4), et en ce qu'une unité de surveillance est en outre agencée dans ledit dispositif émetteur (S1, S2, S3, S4), laquelle commute ledit dispositif émetteur (S1, S2, S3, S4) en un mode d'émission actif dès que la pression dans le pneumatique (20) chute avec un gradient de pression supérieur à une valeur prédéterminée.

2. Dispositif selon la revendication 1, caractérisé en ce que ladite antenne (21, 60) est stationnaire par rapport à la surface de roulement du pneumatique (20), de préférence fixée sur celle-ci ou vulcanisée dans celle-ci.

3. Dispositif selon la revendication 1, caractérisé en ce que ladite antenne (21, 60) est stationnaire par rapport à l'un des flancs latéraux du pneumatique, de préférence fixée sur celui-ci ou vulcanisée dans celui-ci.

4. Dispositif selon l'une ou l'autre des revendications 2 et 3, caractérisé en ce que le dispositif émetteur (S1, S2, S3, S4) est également stationnaire par rapport au pneumatique (20) et de préférence fixé sur la surface de roulement ou sur le flanc latéral du pneumatique, ou vulcanisé dans ladite surface ou dans ledit flanc.

5. Dispositif selon la revendication 1, caractérisé en ce qu'il est prévu un dispositif convertisseur qui convertit en forme numérique les signaux à transmettre par le dispositif émetteur.

6. Dispositif selon l'une quelconque des revendications précédentes, caractérisé en ce que ledit dispositif émetteur (S1, S2, S3, S4) émet avec le signal de pression un signal d'identification qui est identifié de façon univoque par ledit dispositif de mesure de pression, et en ce que ledit dispositif récepteur (E1, E2, E3, E4) reconnaît ce signal d'identification émis et le traite ou le transmet au dispositif de commande central (Z) uniquement lorsque le signal d'identification reçu correspond à une caractéristique déterminée.

7. Dispositif selon la revendication 6, caractérisé en ce que le signal d'identification est mémorisé dans le dispositif émetteur (S1, S2, S3, S4) comme suite de chiffres numériques avec n bits, et en ce que le signal de comparaison d'identification est mémorisé dans le récepteur également comme suite de chiffres numériques avec n bits.

8. Dispositif selon l'une su moins des revendications 6 et 7, caractérisé en ce que le signal de comparaison d'identification mémorisé dans le dispositif récepteur (E1, E2, E3, E4) est variable afin d'adapter le signal d'identification et le signal de comparaison d'identification du dispositif émetteur (S1, S2, S3, S4) et du dispositif récepteur (E1, E2, E3, E4) l'un à l'autre.

9. Dispositif selon l'une quelconque au moins des revendications 1 à 8, caractérisé en ce que la transmission des signaux depuis le dispositif émetteur (S1, S2, S3, S4) jusqu'au dispositif récepteur (E1, E2, E3, E4) s'effectue avec des ondes électromagnétiques (ondes radio) de fréquence constante comme ondes porteuses.

10. Dispositif selon la revendication 9, caractérisé en ce que la fréquence des ondes porteuses électromagnétiques se situe dans la plage des grandes ondes, de préférence entre 4 et 100 kHz, de préférence particulière entre 4 et 50 kHz et de manière tout particulièrement préférée entre 4 et 15 kHz.

11. Dispositif de contrôle selon l'une ou l'autre des revendications 7 et 8, caractérisé en ce que la transmission des données s'effectue par modification de la relation des phases d'un signal porteur sinusoïdal ("phase shift keying") et de préférence via une modification différentielle de la relation des phases ("differential phase shift keying").

12. Dispositif de contrôle selon l'une quelconque au moins des revendications 1 à 11, caractérisé en ce que le dispositif émetteur (S1, S2, S3, S4) comporte une unité d'horloge et en ce qu'il est commandé de telle sorte que le dispositif de mesure de pression mesure la pression à des intervalles temporels prédéterminés sensiblement fixes.

13. Dispositif selon l'une quelconque au moins des revendications 1 à 12, caractérisé en ce que le dispositif émetteur (S1, S2, S3, S4) comporte un dispositif détecteur qui reconnaît un signal émis par le dispositif récepteur (E1, E2, E3, E4) et qui commute, lors de l'apparition de ce signal, le dispositif émetteur (S1, S2, S3, S4) depuis un mode d'attente passif vers un mode d'émission actif, pour effectuer une mesure de pression et pour émettre le signal d'émission.

14. Dispositif de contrôle selon la revendication 13, caractérisé en ce qu'un dispositif récepteur (E1, E2, E3, E4) est associé à chaque dispositif de mesure de pression et d'émission agencé sur une roue (R1, R2, R3, R4) du véhicule automobile, les signaux reçus par le dispositif récepteur (E1, E2, E3, E4) étant amenés à un dispositif d'affichage central (A).

15. Dispositif selon l'une quelconque au moins des revendications 6 à 14, caractérisé en ce que le dispositif récepteur (E1, E2, E3, E4) est connecté à un dispositif de commutation qui permet une commutation du dispositif récepteur (E1, E2, E3, E4) depuis le mode de fonctionnement normal dans lequel la pression de gonflage est contrôlée vers un mode d'appariement dans lequel le dispositif récepteur (E1, E2, E3, E4) reçoit le signal d'identification de chaque dispositif émetteur (S1, S2, S3, S4) et le mémorise en tant que signal de comparaison d'identification de préférence avec association de la position de roue respective.

16. Dispositif selon la revendication 15, caractérisé en ce que chaque dispositif émetteur (S1, S2, S3, S4) comprend un dispositif détecteur qui reconnaît l'émission d'un signal de commutation prédéterminé et qui commute alors le dispositif émetteur (S1, S2, S3, S4) vers un mode d'appariement dans lequel sont émis le signal d'identification et un signal supplémentaire affichant le mode d'appariement.

17. Dispositif selon l'une quelconque des revendications précédentes, caractérisé en ce qu'il est prévu en outre sur la roue de véhicule (R1, R2, R3, R4) un dispositif de mesure de température qui détecte la température dans la chambre à air de la roue (R1, R2, R3, R4), et en ce que ledit dispositif émetteur (S1, S2, S3, S4) reçoit le signal de température délivré par le dispositif de mesure de température et émet un signal de température correspondant qui est reçu et traité par le dispositif récepteur (E1, E2, E3, E4).

18. Dispositif selon la revendication 17, caractérisé en ce qu'un avertissement acoustique et/ou optique est délivré lorsque la température dans l'un des pneumatiques (20) dépasse une valeur limite prédéterminée ou lorsqu'une différence de température trop importante entre les différents pneumatiques (20) du même véhicule ou entre la température des pneumatiques et la température ambiante est constatée.

19. Dispositif selon l'une quelconque au moins des revendications 1 à 18, caractérisé en ce que l'antenne (21, 60) est réalisée sous forme d'une spirale qui est maintenue dans le pneumatique par des forces élastiques.

20. Dispositif selon la revendication 19, caractérisé en ce que l'antenne est constituée par des anneaux individuels (50, 51) qui sont susceptibles d'être reliés via une liaison à enfichage (52) pour former une bobine électrique et qui sont fixés dans le pneumatique (20) par des forces élastiques.

21. Dispositif selon la revendication 19 ou la revendication 20, caractérisé en ce que les spires individuelles (50, 51) de l'antenne (21, 60) sont enveloppées par un corps de préférence élastique (61).

22. Application du dispositif selon l'une quelconque au moins des revendications 1 à 21 dans les pneumatiques d'une voiture particulière et/ou d'un poids lourd et/ou de véhicules autopropulseurs tels que des grues, des excavateurs, des machines de construction, des machines agricoles ou similaires et/ou pour surveiller les pneumatiques d'un avion.
